Europäisches Patentamt

European Patent Office

Office européen des brevets

(11) Publication number: **0 266 834**
**A1**

## (12) EUROPEAN PATENT APPLICATION

(21) Application number: 87202062.3

(22) Date of filing: 27.10.87

(51) Int. Cl.⁴ **H02K 33/16 , H02K 33/06**

(30) Priority: 29.10.86 NL 8602719

(43) Date of publication of application:
**11.05.88 Bulletin 88/19**

(84) Designated Contracting States:
**AT DE ES FR GB IT NL SE**

(71) Applicant: **N.V. Philips' Gloeilampenfabrieken**
**Groenewoudseweg 1**
**NL-5621 BA Eindhoven(NL)**

(72) Inventor: **Boon, Fidelus Adrianus**
c/o INT. OCTROOIBUREAU B.V. Prof.
Holstlaan 6
**NL-5656 AA Eindhoven(NL)**
Inventor: **Verboven, Paulus Josephus Maria**
c/o INT. OCTROOIBUREAU B.V. Prof.
Holstlaan 6
**NL-5656 AA Eindhoven(NL)**

(74) Representative: **Bos, Kornelis Sjoerd et al**
**INTERNATIONAAL OCTROOIBUREAU B.V.**
**Prof. Holstlaan 6**
**NL-5656 AA Eindhoven(NL)**

(54) Oscillating motor.

(57) A reluctance-type oscillating motor comprises a stator core (1) of a magnetisable material, at least one coil (2a) arranged around the core, a stator member (3) of a magnetisable material, a space (4) situated between the core and the stator member, turns of the coil extending through and a permanent magnet (5a) being disposed in said space, and at least one armature (6, 7) of a magnetisable material which is movable in an air gap (8) between the core and the stator member. In order to improve the efficiency of the motor at least most of the coil turns are arranged between the core (1) and the permanent magnet (5a).

FIG.2

## "Oscillating motor"

The invention relates to a reluctance-type oscillating motor comprising a stator core of a magnetisable material, at least one coil arranged around the core, a stator member of a magnetisable material, a space situated between the core and the stator member, through which space turns of the coil extend and in which a permanent magnet is disposed, and at least one armature of a magnetisable material, which is movable in an air gap between the core and the stator member.

In such oscillating motors it is known to arrange the coil turns adjacent the permanent magnet. The permanent magnet is then completely enclosed between the core and the stator member. The movable armature is situated adjacent the coil in an air gap between the core and the stator member.

It is the object of the invention to improve an oscillating motor of the type defined in the opening paragraph.

To this end the motor in accordance to the invention is characterized in that at least most of the coil turns are disposed between the core and the permanent magnet. In comparison with the known motor such a motor having the same overall dimensions and number of ampere-turns has a higher efficiency. The main reason for this is that the coil turns are disposed at an averagely smaller diameter, so that

a) thermal losses are reduced and

b) the loss of magnetomotive force is reduced. The latter is a result of the location of the coil relative to the permanent magnet, so that in the invention the permanent magnet becomes thinner but also wider. Since the magnet is wider the magnetic load of the stator-member iron is reduced, because the magnetic flux enters the iron over a larger surface area. Consequently, the loss of magnetomotive force across the iron is reduced, so that the motor can deliver more power per ampere-turn. Moreover, eddy-current losses are reduced because the average flux density decreases.

An additional advantage is that less copper is required, so that the motor is cheaper and lighter in weight.

Obviously, the motor in accordance with the invention may also be constructed in such a way that its dimensions are reduced in comparison with said known motor, whilst its efficiency remains the same.

Embodiments of the invention will now be described in more detail, by way of example, with reference to the accompanying drawing. In the drawing

Figure 1 shows schematically a linear oscillating motor in accordance with the prior art,

Figure 2 shows schematically a linear oscillating motor in accordance with the invention,

Figure 3 shows schematically another linear oscillating motor in accordance with the invention, and

Figure 4 shows schematically yet another oscillating motor in accordance with the invention, in which the armatures perform an oscillation about an axis of rotation and the coils are arranged in the coil chambers in the core.

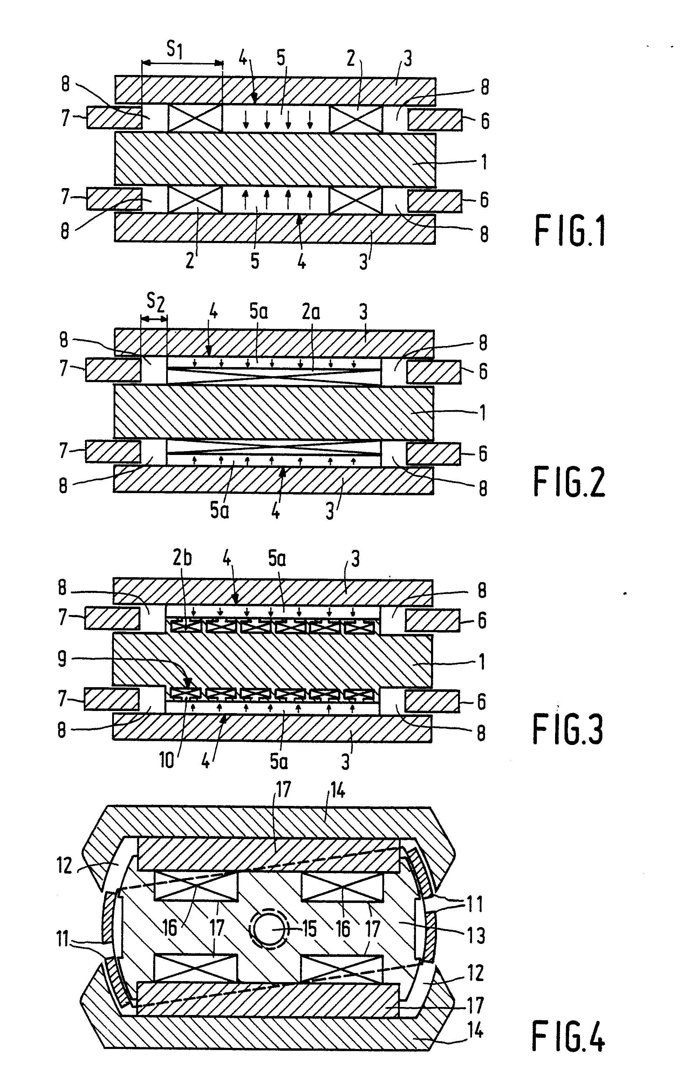

In order to enable a proper comparison to be made between a prior-art motor as shown in Figure 1 and a motor in accordance with the invention as shown in Figure 2, the iron dimensions of the stator members and the core are the same, the permanent-magnet volume is the same and the number of coil turns is the same. In the motor of Figure 1 two coils are provided, one on each side of the permanent magnets. The coils shown in Figure 1 together have the same number of ampere-turns as the single coil in Figure 2. The spaces available between the stator members and the core are also the same, i.e. the volume occupied by the coils and the permanent magnets in each of these spaces is the same in both Figures.

In the Figures identical parts bear the same reference numerals. The core of a magnetisable material bears the reference numeral 1, the coil arranged around this core is designated 2 (2a), the stator members of a magnetisable material are designated 3, the spaces between the core and the stator members are designated 4, the permanent magnets are designated 5 (5a), the movable armatures are 6 and 7, and the air gaps between the core and the stator members in which the armatures are movable bear the numeral 8.

The oscillating motor operates as follows: when the coils are energised with alternating current an alternating magnetic field is produced, which is superimposed on the magnet field produced by the permanent magnets. The permanent magnets are magnetised oppositely. Consequently, the resulting flux density in each armature is alternately high and low, in such a way that at the same instant the armatures 6 experience a high flux density whilst the armatures 7 experience a low flux density at this instant. This results in movement of the armatures 6 in the air gap 8 where the flux density is higher. Reversal of the current in the coils results in the movement of the armatures being reversed. In this way a reciprocating movement of the armatures is obtained.

In accordance with the invention the motor of Figure 2 has a higher efficiency than the motor of Figure 1. This has the following reasons:

- in Figure 2 the coil turns 2a are disposed at an averagely smaller diameter around the stator core 1 than the coil turns 2 in Figure 1, so that thermal losses in the turns are smaller when the number of ampere-turns is the same.

- as the available space 4 in Figure 2 is utilized by the permanent magnets 5a and the coil 2a in Figure 2 in such a way that the coil 2a is situated between the core 1 and the magnets 5a, the magnets 5a become wider (and of course thinner); a wider magnet imposes an averagely smaller magnetic load on the iron of the stator members 3 because the magnetic flux enters the iron over a larger surface area; in Figures 1 and 2 $S_1$ and $S_2$ are the respective distances over which the magnetic flux traverses the iron from the respective edges of the permanent magnets 5 and 5a up to the respective edges of the armatures 7, where the flux again passes from the core to the stator member; it is evident that $S_2$ is substantially smaller than $S_1$; the result of this is that in the motor of Figure 2 the loss of magnetomotive force across the iron is smaller than in the motor of Figure 1, so that the motor of Figure 2 delivers more power per ampere-turn, the iron volume being of course the same.

In the motor shown schematically in Figure 3 the coils 26 are arranged in coil chambers or slots 9 in the core 1. A comparison of the motor of Figure 2 with that of Figure 3 reveals that for the same output power of the motor the efficiency of the motor of Figure 3 is even higher than that of the motor of Figure 2 despite the fact that the number of coil turns is smaller. The reason for this is that the flux generated by the smaller number of coil turns decreases less rapidly than the magnetic flux increases. The magnetic flux increases because now less magnetic flux passes through the coils and instead of this is passed directly into the core iron. Despite the negative effect of an increase of eddy-current losses, because the coils are almost fully surrounded by iron, the net gain in efficiency is higher in comparison with the motor shown in Figure 2. Winding the coil is more difficult because the coil chambers have only a small slotted opening 10, but the coils are now better confined and the magnet has a wider supporting surface, so that flexure (vibrations) is reduced.

Figure 4 shows an oscillating motor whose principle is described in EP-A-0155057. In this motor the armatures are constituted by sliding elements 11, which can perform an oscillation about an axis of rotation 15 in circularly arcuate air gaps 12 between the core 13 and the stator plates 14. The coils 16 are situated entirely between the permanent magnets 17 and the core 13 in coil chambers 17 formed in the core. Such a motor has all the afore-mentioned advantages in comparison with the motor in accordance with EP-A-0155057.

## Claims

1. A reluctance-type oscillating motor comprising a stator core of a magnetisable material, at least one coil arranged around the core, a stator member of a magnetisable material, a space situated between the core and the stator member, through which space turns of the coil extend and in which a permanent magnet is disposed, and at least one armature of a magnetisable material, which is movable in an air gap between the core and the stator member, characterized in that at least most of the coil turns are disposed between the core and the permanent magnet.

2. A motor as claimed in Claim 1, in which a stator member is arranged on opposite sides of the core and a space is formed between the core and each stator member, the turns of each coil extending through both spaces and a permanent magnet being disposed in each space, air gaps in which armatures are movable being situated on both sides of the spaces, characterized in that at least most of the coil turns are disposed between the core and the two permanent magnets.

3. A motor as claimed in Claim 1 or 2, characterized in that the entire coil is situated between the core and the permanent magnet(s).

4. A motor as claimed in Claim 3, characterized in that each coil is arranged in a coil chamber situated in the core.

5. A motor as claimed in Claim 4, characterized in that each coil chamber communicates with said space via a slotted opening.

6. A motor as claimed in any one of the Claims 2 to 5, characterized in that the air gaps in which the armatures are movable have circularly arcuate shapes and the armatures are mounted for rotation on a motor shaft.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 740 594 (CASEY) <br> * Column 2, line 66 - column 4, line 38; figures 1-4 * | 1-3 | H 02 K 33/16 <br> H 02 K 33/06 |
| Y | ELEKTROTECHNIK UND MASCHINENBAU, vol. 96, no. 10, October 1979, pages 452-457, Vienna, AT; Z. PEJSEK et al.: "Der schwingende Synchronlinearmotor mit Dauermagneten als Resonanz-Zugkrafterreger" <br> * Page 452, right-hand column, last paragraph - page 453, right-hand column, paragraph 1; figure 1 * | 1-3 | |
| A | DE-A-1 401 219 (TURNER) <br> * Page 14, line 15 - page 15, line 11; figure 1 * | 1-4 | |
| Y | US-A-2 506 624 (WIRSCHING) <br> * Column 2, line 1 - column 4, line 27; figures 1-3 * | 1-3 | |
| Y | DE-C- 845 676 (LORENZ) <br> * Page 2, lines 17-63; figures 1,2 * | 1-3 | TECHNICAL FIELDS SEARCHED (Int. Cl.4) <br><br> H 02 K <br> H 04 R |
| D,A | EP-A-0 155 057 (PHILIPS) <br> * Pages 9,10; figures 1-10 * | 1,2,4,6 | |
| A | US-A-4 454 426 (BENSON) <br> * Column 8, lines 18-22; figures 3, 5A-5C * | 4,5 | |
| A | US-A-3 433 983 (KEISTMAN) <br> * Figure 1 * | 4,5 | |

The present search report has been drawn up for all claims

| Place of search | Date of completion of the search | Examiner |
|---|---|---|
| THE HAGUE | 29-01-1988 | TIO K.H. |